# EUROPÄISCHE PATENTSCHRIFT

(11) **EP 1 842 647 B1**
(45) Veröffentlichungstag und Bekanntmachung des Hinweises auf die Patenterteilung: **11.02.2009**
(21) Anmeldenummer: 06112159.6
(22) Anmeldetag: 03.04.2006
(51) Int. Cl.: B29C 43/22, B32B 17/10

(54) **Verfahren zur Herstellung einer einseitig geprägten Folie auf Basis von teilacetalisiertem Polyvinylalkohol**
Method for production of a single side embossed sheet on the basis of partially acetalized polyvinyl alcohol
Procédé de fabrication d'une fuille gaufrée sur une face à base de l'alcool polyvinylique partiellement acétalisé

(43) Veröffentlichungstag der Anmeldung: 10.10.2007
(73) Patentinhaber: Kuraray Europe GmbH, 65926 Frankfurt am Main (DE)
(72) Erfinder: Stenzel, Holger, Dr., 53773 Hennef (DE); Offermann, Uwe, 53721 Siegburg (DE)
(74) Vertreter: Kisters, Michael Marcus

(56) Entgegenhaltungen:
- EP-A- 1 006 236
- WO-A-20/05005123
- US-A- 4 486 363
- US-A- 4 671 913
- US-A- 4 859 392
- US-A- 6 093 471
- US-A1- 2002 114 922
- US-A1- 2004 191 482

## Beschreibung

Die Erfindung betrifft ein Verfahren zur Herstellung einer Folie auf Basis von teilacetalisiertem Polyvinylalkohol mit einer glatten Seite und einer durch Prägen eingestellten Rauhigkeit der anderen Seite.

Übliche Verbundglasscheiben bestehen aus einem Glas/Polyvinylbutyral (PVB)/Glas/Laminat und werden schon lange im Architekturbereich oder als Windschutzscheibe für Kraftfahrzeuge eingesetzt. Zur Verbesserung der Reflexions- und Strahlungsabsorptionseigenschaften dieser Verbundverglasungen kann z.B. gemäß WO 97/03763 anstelle einer einzigen PVB-Folie ein Laminat aus zwei PVB-Folien und einer zwischengelegten Funktionsschicht verwendet werden. Die Haftung der Zwischenschichtfolie am Glas wird auch hier durch die bekannt guten Haftungseigenschaften des PVB bestimmt, die zusätzliche Funktion (z.B. Reflexion) wird von der Funktionsschicht (z.B. Metall bedampfte PET-Folie) übernommen.

Die in solchen Laminaten eingesetzten PVB-Folien müssen unterschiedliche Oberflächen der beiden Folienseiten aufweisen. Die dem Glas zugewandten Seiten müssen eine bestimmte Rauheit oder Struktur besitzen, um einen blasen- und trübungsfreien Laminierprozess zu ermöglichen. Die der Funktionsschicht zugewandten Seiten müssen dagegen möglichst glatt sein.

Zur Herstellung von PVB-Folien einer vorbestimmten Rauheit oder Oberflächenstruktur sind eine Reihe von Verfahren bekannt:

### Stand der Technik

Ein typisches Verfahren zur Herstellung von Folien mit aufgerauter Oberfläche ist aus der EP 0 185 863 B1 als Schmelzbruchverfahren bekannt. Schmelzbruchverfahren führen zu unregelmäßig (stochastisch) aufgerauten Oberflächen.

Weitere im Stand der Technik beschriebene Verfahren zur Herstellung einer aufgerauten Oberfläche von Zwischenschichtfolien sind Prägeverfahren. Gemeinsames Kennzeichen aller durch Prägeverfahren hergestellten Folienoberflächen ist eine regelmäßige, (nicht-stochastische) Oberflächenstruktur, die vor allem im Herstellprozess von Glaslaminaten mit dem Vakuumsack-Verfahren ein gutes Entlüftungsverhalten zeigt und somit kurze Prozesszeiten und breite Verarbeitungsfenster ermöglicht.

EP 0 741 640 B1 beschreibt ein solches Prägeverfahren zur Herstellung einer beidseitig geprägten Oberfläche mittels zweier Prägewalzen, durch die die Folie mit einer regelmäßigen, sägezahnartigen Linienstruktur versehen wird. Die auf jeder Seite der Folie eingeprägten Linien kreuzen sich in einem Winkel >25°, so das ein sogenanntes Moire-Muster im Verbundglas verhindert wird.

EP 1 233 007 A1 offenbart zur Vermeidung des Moire-Effektes ein Prägeverfahren, das eine regelmäßige, linienförmige Prägestruktur auf jeder Seite der Folie erzeugt. Zur Vermeidung von Interferenzen besitzen die Linienstrukturen der beiden Folienseiten unterschiedliche Wiederholfrequenzen.

Ein anderes, in US 4,486,363 und US 5,972,280 beschriebenes Verfahren, verwendet zum Prägen der Oberflächenstrukturierung anstelle zweier Prägewalzen nur eine Walze und ein an der Walze über Rollen und Druckluft anliegendes strukturiertes Stahlband, wobei die Folie während des Prägevorgangs durch den Spalt zwischen Prägewalze und Stahlband geführt wird.

US 4,671,913 offenbart ein Verfahren zur Prägung von PVB-Folien, wobei die Folie in einem einzigen Arbeitsgang zwischen zwei strukturierten Walzen geprägt wird. Die Walzen - und damit auch die geprägte Folie - besitzen eine Rauhigkeit R_{z} von 10 bis 60 µm.

Die beschriebenen beidseitigen Prägeverfahren besitzen den Nachteil, nur eine geringe Verweildauer der Folie im Walzenspalt zu erreichen. Dadurch nimmt die Prägung bei zunehmender Prägegeschwindigkeit stark ab, was für einen industriellen Fertigungsprozess unerwünscht ist. Zudem sind beidseitig geprägte Folien zur Laminierung mit einer weiteren Zwischenschichtfolie wie z.B. einer Funktionsfolie gemäß WO 97/03763 ungeeignet, da sich die Prägestruktur auf der Funktionsfolie abdrückt.

Bei einem einseitigen Prägeverfahren tritt dieser Effekt nicht auf, bzw. kann durch eine entsprechende Auswahl der Walzenoberflächen und des Prägedrucks unterdrückt werden. So beschreiben US 2003/0022015, WO 01/72509, US 6,077,374 und US 6,093,471 ein- und zweistufige Prägeverfahren für PVB-Folien mittels Prägewalzen aus Stahl und Anpresswalzen mit einer Gummibeschichtung. Die Gummibeschichtung bzw. die zwischen den Walzen auf die Folie aufgebrachte Kraft ist nicht näher beschrieben. Sind die Walzenoberflächen zu hart resultiert eine kleine Prägezone, die praktisch auf eine Linie reduziert ist. Dies führt zu einer niedrigen Verweildauer der Folie in der Prägezone und damit zu einer niedrigen Prägegeschwindigkeit. Werden dagegen zu weiche Walzenoberflächen verwendet, so kann nur eine unzureichende Kraft auf die Folie ausgeübt werden, so dass die Prägequalität sinkt.

Die bestehenden Verfahren sind in Bezug auf die Prägeleistung verbesserungsfähig.

US 4,859,392 offenbart ein Verfahren zum Glätten von PMMA-Filmen zwischen einer Kühl- und einer Anpressrolle mittels einer Hilfsfolie. Die hier eingesetzten Liniendrücke sind zur Herstellung von strukturierten Oberflächen zu hoch.

Aufgabe der vorliegenden Erfindung war es daher, ein Verfahren zum einseitigen Prägen von Folien auf Basis von teilacetalisiertem Polyvinylalkohol zu entwickeln, das diese Nachteile nicht aufweist.

Überraschenderweise wurde gefunden, dass die Prägung einer Folie auf Basis von teilacetalisiertem Polyvinylalkohol mit ausreichender Qualität und Geschwindigkeit zwischen einer Prägewalze und einer Anpresswalze einer bestimmten Shore-A-Härte möglich ist.

### Darstellung der Erfindung

Gegenstand der vorliegenden Erfindung ist ein Verfahren zur Herstellung einer Folie auf Basis von teilacetalisiertem Polyvinylalkohol mit einer Rauhigkeit der ersten Seite von R_{z} = 1 bis 30 µm und einer Rauhigkeit der zweiten Seite von R_{z} = 20 bis 100 µm, durch die Verfahrensschritte
a. Bereitstellen einer Folie auf Basis von teilacetalisiertem Polyvinylalkohol mit einer Rauhigkeit beider Seiten von R_{z} = 1 bis 30 µm und
b. Prägen der anderen Seite der Folie zwischen einer entsprechend aufgerauten Prägewalze einer Temperatur von 80 bis 170 °C und einer Anpresswalze einer Temperatur von 0 bis 60 °C unter Erhalt einer Folie mit einer Rauhigkeit der geprägten Oberfläche von R_{z} = 20 bis 100 µm,
wobei die Anpresswalze eine Shore-A-Härte von 50 - 80 aufweist und die Folie zwischen der Prägewalze und der Anpresswalze einem Liniendruck von 20 bis 80 Nnm ausgesetzt ist.

Das erfindungsgemäße Verfahren führt bevorzugt zu einer nichtstochastischen Rauhigkeit der geprägten Seite der Folie.

Die Messung der Oberflächenrauhigkeit der Folie mit dem Rauhigkeitswert R_{z} erfolgt nach DIN EN ISO 4287 und DIN ISO 4288. Die zur Messung der Oberflächenrauhigkeit verwendeten Messgeräte müssen der EN ISO 3274 genügen. Die eingesetzten Profilfilter müssen der DIN EN ISO 11562 entsprechen.

Die Oberflächenstruktur bzw. Rauhigkeit der Folie gemäß Schritt a) kann z.B. durch das sogenannte Fließ- oder Schmelzbruchverfahren entsprechend der EP 0 185 863 B1, auf deren Inhalt hier ausdrücklich hingewiesen wird, aufgebracht werden. Unterschiedliche Rauhigkeitsniveaus können durch Variation der Austrittsspaltweite und der Düsen-Lippentemperaturen unmittelbar am Düsenaustritt gezielt erzeugt werden.

Es ist auch möglich, Folien durch Extrusion ohne Schmelzbruch herzustellen. Alternativ kann die Folie durch Extrusion und Glätten über gekühlte Walzen gemäß US 4,671,913 hergestellt werden. Der Einsatz der Folien mit einer möglichst geringen Rauhigkeit beider Seiten ist im erfindungsgemäßen Verfahren bevorzugt, da raue Strukturen nur mit höherem Prägeaufwand überprägt werden können. Weiterhin könnte sich die ursprüngliche Rauhigkeit bei der Vorverbundherstellung wieder einstellen, so dass die Vorteile einer geprägten Folie gegenüber einer durch Schmelzbruch aufgerauten Oberfläche gemindert werden.

Im anschließenden Prägeverfahren gemäß Schritt b) wird die Folie auf einer Seite mit einer Oberflächenstruktur einer Rautiefe von R_{z} = 20 bis 100 µm, bevorzugt R_{z} = 20 bis 80 µm, insbesondere R_{z} = 30 µm bis 50 µm versehen.

Die andere, nicht-geprägte Seite der Folie weist bevorzugt eine Rautiefe von R_{z} = 1 bis 30, bevorzugt R_{z} = 1 bis 20, insbesondere R_{z} = 1 bis 10 auf. Diese Rauheit kann identisch mit der Rauheit der Folie gemäß Schritt a) sein, kann aber auch im Prägeverfahren gemäß b) noch beeinflusst werden. So ist es durch Einsatz entsprechender Anpresswalzen möglich, die ursprüngliche Rauheit zu reduzieren oder zu erhöhen.

Vor und/oder nach dem Prägevorgang b) kann die Folie auf -10 bis +20 °C abgekühlt und so die Oberflächenstruktur der Folie fixiert werden. Die Abkühlung erfolgt bevorzugt über entsprechend temperierte Kühlwalzen. Hier ist die sog. Vorderseitenkühlung möglich, d.h. die geprägte Seite der Folie wird gekühlt. Alternativ ist die sog. Rückseitenkühlung, bei der die nicht geprägte Seite der Folie gekühlt wird.

Die Kühlung der Folien kann auch auf deren Oberfläche beschränkt sein. So kann die Oberflächentemperatur der zu prägenden Seite der Folie auf -10 bis +20 °C eingestellt werden. Alternativ kann die nicht-geprägte Oberfläche der Folie auf diese Temperatur eingestellt werden.

Die Prägewalzen sind bevorzugt aus Metall hergestellt und besitzen eine Oberfläche mit einer negativen Profilierung der später in der Folienoberflächen befindlichen Struktur. Die im erfindungsgemäßen Verfahren eingesetzten Prägewalzen müssen eine der angestrebten Rauheit der Folie entsprechende Rauheit aufweisen. In einer Verfahrensvariante besitzen die geprägte Folie und die Prägewalzen die gleiche oder nahezu eine gleiche Rauheit. In Abhängigkeit der Verfahrensparameter Folientemperatur, Liniendruck, Walzentemperatur, Walzengeschwindigkeit oder Foliengeschwindigkeit kann die Rauhigkeit der geprägten Folie auch erheblich geringer sein als die der Prägewalzen. So kann die Rauhigkeit R_{z} der Prägewalzen 400 %, bevorzugt, 300 %, insbesondere 100 % über der Rauhigkeit R_{z} der mit dieser Walze geprägten Folienoberflächen liegen. Die Temperatur der Prägewalzen beträgt 80 bis 170 °C, bevorzugt 100 bis 150 °C und insbesondere 110 bis 140 °C. Besonders bevorzugt besitzen die Prägewalzen eine beschichtete Stahloberfläche (z.B. PTFE), um das Kleben der Folie zu reduzieren.

Im erfindungsgemäßen Verfahren wird die Folie zwischen der Prägewalze und der gegenläufig rotierenden Anpresswalze geführt. Bevorzugt wird die Folie zwischen der Prägewalze und Anpresswalze einem Liniendruck von 40 bis 65 N/mm ausgesetzt. Unter dem Liniendruck wird die Anpresskraft des Walzenpaars, bezogen auf die Folienbreite, verstanden.

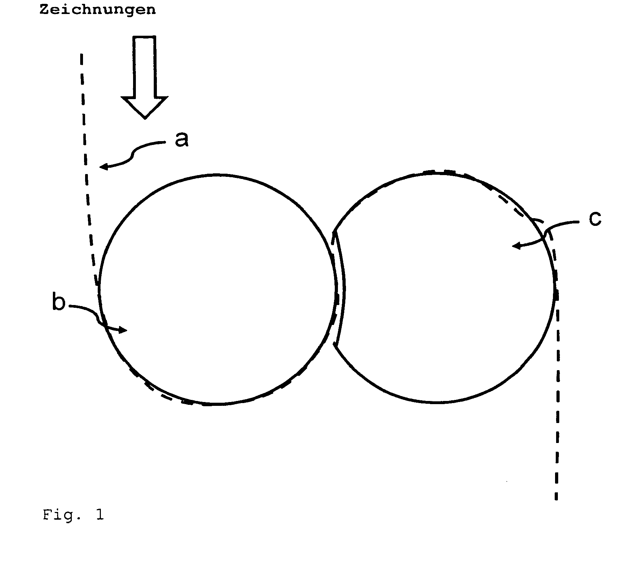

Die Anpresswalze weist Temperaturen von 0 bis 60 °C, bevorzugt 10 bis 40 °C auf d.h. sie wird gegenüber der Prägewalze aktiv gekühlt. Die Anpresswalze besitzt keine oder nur eine geringe Rauheit (R_{z} max. 10 µm) und bestehen bevorzugt aus einem Metallkern mit einer Oberfläche aus Kautschuk oder EPDM. Die Oberfläche der Anpresswalze weist insbesondere eine Shore-A Härte von 60 bis 75 auf. Die Anpresswalze drückt die Folie in die strukturierte Oberfläche der Prägewalze und schmiegt sich dabei an die Prägewalze leicht an. Durch eine Veränderung des Liniendruckes kann die Fläche der Prägezone und damit die Verweildauer verändert werden. Dies ist schematisch in Fig. 1 dargestellt, wobei mit a) die zu prägende Folie, b) die Präge- und c) die Anpresswalze bezeichnet ist. Neben der hier gezeigten Führung der Folie um die Walzen herum ist auch die einfache Führung der Folie durch den Walzenspalt ohne Umschlingen der Walzen möglich.

Durch Wahl der Verfahrensparameter Liniendruck, Folien- und/oder Walzentemperaturen, Walzengeschwindigkeit und Umschlingungswinkel der Folienbahn auf den Walzen kann bei vorgegebener Rautiefe der Prägewalze die Rautiefe der Folienprägung beeinflusst werden.

Die Qualität des Prägevorgangs hängt auch von der Temperaturkonstanz der Folie und damit der Kühl-, Anpress- und Prägewalzen ab. Bevorzugt wird daher die Temperaturdifferenz der Präge- und/oder Anpresswalze über deren Breite und Umfang kleiner 2°C, insbesondere kleiner 1 °C eingestellt.

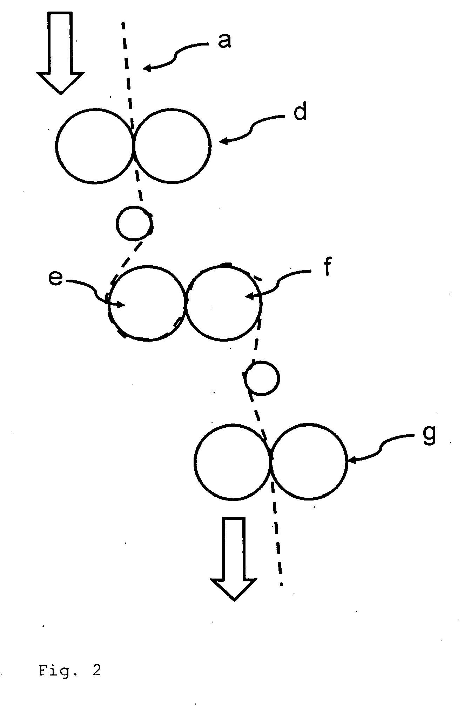

Fig. 2 zeigt schematisch eine Variante des erfindungsgemäßen Verfahrens. Die Laufrichtung der Folie ist mit Doppelpfeilen gekennzeichnet. Die mit einer geringen Rauhigkeit versehene Folie (a) wird optional im Walzenpaar (d) temperiert und zwischen der Prägewalze (e) und der Anpresswalze (f) einseitig geprägt. (e) und (f) sind wie beschrieben temperiert. Anschließend kann die Temperatur der so einseitig geprägten Folie im Walzenpaar (g) eingestellt und somit die Prägung fixiert werden. Die in Fig. 2 nicht bezeichneten Walzen dienen der Führung der Folie. Zur besseren Temperatureinstellung können die Walzenpaare d) und g) auch von der Folie umschlungen werden, so dass die Verweilzeit der Folie auf den Walzen erhöht wird.

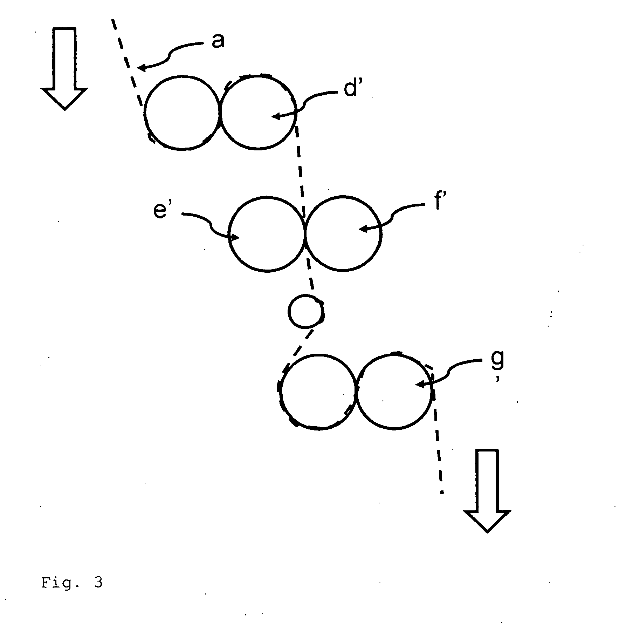

Alternativ ist auch die direkte Führung der Folie durch den Prägespalt ohne Umschlingen der Präge- oder Anpresswalzen möglich. Diese Variante des erfindungsgemäßen Verfahrens ist in Fig. 3 dargestellt. Hier stehen d' und g' für Walzenpaare zur Temperierung der Folie und e' und f' für Anpress- bzw. Prägewalzen. Der Einsatz des ersten Walzenpaars d' zur Temperierung der Folie vor dem Prägen ist optional.

Auch hier kann die Folie durch den Walzenspalt der Temperierwalzen direkt d.h. ohne Umschlingen, geführt werden.

Als teilacetalisierter Polyvinylalkohol kann insbesondere Polyvinylbutyral (PVB), in vernetzter oder unvernetzter Form, jeweils in Gemisch mit mindestens einem Weichmacher, Farbstoffen, Pigmenten, Metallsalzen zur Haftungsregulierung, organischen Additiven und/oder anorganischen Füllstoffen eingesetzt werden.

Als Weichmacher für die teilacetalisiertem Polyvinylalkohole eignen sich zum einen alle nach dem Stand der Technik zu diesem Zweck bekannten Weichmacher, insbesondere die Ester von mehrwertigen Säuren, mehrwertigen Alkoholen oder Oligoetherglykolen, wie z. B. Adipinsäureester, Sebazinsäureester oder Phthalsäureester, insbesondere Di-n-hexyladipat, Dibutylsebazat, Dioctylphthalat, Ester von Di-, Tri- oder Tetraglykolen mit linearen oder verzweigten aliphatischen Carbonsäuren und Mischungen dieser Ester. Als Standardweichmacher für teilacetalisierte Polyvinylalkohole, insbesondere Polyvinylbutyral, werden bevorzugt Ester von aliphatischen Diolen mit langkettigen aliphatischen Carbonsäuren, insbesondere Ester von Triethylenglykol mit 6 bis 10 C-Atomen enthaltenden aliphatischen Carbonsäuren, wie 2-Ethylbuttersäure oder n-Heptansäure eingesetzt. Besonders bevorzugt sind ein oder mehrere Weichmacher aus der Gruppe bestehend aus Di-n-hexyladipat (DHA), Dibutylsebazat (DBS), Dioctylphthalat (DOP), Ester von Di-, Tri- oder Tetraglykolen mit linearen oder verzweigten aliphatischen Carbonsäuren, insbesondere Triethylenglykol-bis-2-ethylbutyrat (3GH), Triethylenglykol-bis-n-heptanoat (3G7), Triethylenglykol-bis-2-ethylhexanoat (3G8), Tetraethylenglykol-bis-n-heptanoat (4G7).

In einer besonderen Ausführungsform der vorliegenden Erfindung kann die Haftung der Folie an den Prägewerkzeugen weiter vermindert werden, indem dem Folienmaterial eine die Haftkraft vermindernde Substanz zugesetzt wurde.

Als haftungsreduzierendes organisches Additiv können z.B. 0.01 bis 2 Gew.%, bezogen auf die Gesamtmischung, Pentaerythrite der Formel I 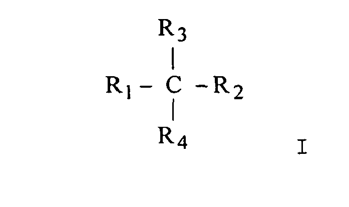 wobei R₁, R₂, R₃, R₄ jeweils gleich oder verschiedenen für Reste der Gruppe -CH₂OH, -CH₂OR₅, -CH₂OCOR₅ oder -CH₂OCO-R₆-COOR₅, stehen und R₅, R₆ für gesättigte oder ungesättigte, verzweigte oder unverzweigte Kohlenwasserstoffreste mit 1 bis 26 Kohlenstoffatome stehen,
zugesetzt werden.

Die als optionaler Zusatz verwendeten Pentaerythrite bzw. deren Ester erleichtern bei Einsatz von teilacetalisiertem Polyvinylalkoholen als polymerem Material aber auch den Einsatz von Spezialweichmachern, die z. B. eine verbesserte Schalldämmung der Folien bewirken, siehe auch die DE 199 38 159 A1, auf deren Inhalt hiermit vollinhaltlich bezug genommen wird. Zu den Spezialweichmachern zählt insbesondere die Gruppe von Weichmachern bestehend aus
- Polyalkylenglykolen der allgemeinen Formel
   HO-(R-O)ₙ-H mit R = Alkylen und n > 5,
- Blockcopolymeren aus Ethylen- und Propylenglykol der allgemeinen Formel HO-(CH₂-CH₂-O)ₙ-(CH₂-CH(CH₃)-O)ₘ-H mit n > 2, m > 3 und (n+m) < 25,
- Derivaten von Blockcopolymeren aus Ethylen- und Propylenglykol der allgemeinen Formel R₁O-(CH₂-CH₂-O)ₙ-(CH₂-CH(CH₃)-O)ₘ-H bzw. HO-(CH₂-CH₂-O)ₙ-(CH₂-CH(CH₃)-O)ₘ-R₁ mit n>2, m > 3 und (n+m) < 25 und R₁ als organischem Rest,
- Derivate von Polyalkylenglykolen der allgemeinen Formel R₁-O-(R₂-O)ₙ-H mit R₂ = Alkylen und n ≥ 2, bei denen der Wasserstoff von einer der beiden terminalen Hydroxygruppen des Polyalkylenglykols durch einen organischen Rest R₁ ersetzt ist,
- Derivate von Polyalkylenglykolen der allgemeinen Formel R₁-O-(R₂-O)ₙ-R₃ mit R₂ = Alkylen und n > 5, bei denen der Wasserstoff bei der terminaler Hydroxygruppen des Polyalkylenglykols durch einen organischen Rest R₁ bzw. R₃ ersetzt ist.

Diese Spezialweichmacher werden bevorzugt bei teilacetalisiertem Polyvinylalkoholen, hier insbesondere PVB, in Kombination mit einem oder mehreren Standardweichmachern in einen auf die Gesamtmischung der Weichmacher bezogenen Anteil von 0,1 bis 15 Gew.% eingesetzt.

Das plastifizierte teilacetalisierte Polyvinylalkohol-Harz enthält vorzugsweise 25 bis 45 Gewichtsteile und besonders bevorzugt 30 bis 40 Gewichtsteile Weichmacher, bezogen auf 100 Gewichtsteile Harz.

Die teilacetalisiertem Polyvinylalkohole werden in bekannter Weise durch Acetalisierung von hydrolysierten Polyvinylestern hergestellt. Als Aldehyde können beispielsweise Formaldehyd, Acetaldehyd, Propionaldehyd, Butyraldehyd u. dgl., bevorzugt Butyraldehyd, verwendet werden.

Das bevorzugte Polyvinylbutyral-Harz enthält 10 bis 25 Gew.-%, vorzugsweise 17 bis 23 Gew.-% und besonders bevorzugt 19 bis 21 Gew.-% Vinylalkoholreste bzw. 0 bis 20 Gew.-%, bevorzugt 0,5 bis 2,5 Gew.-% Acetatreste.

In einer weiteren Verfahrensvariante wird als Polymer ein mit einem Polyaldehyd (insbesondere Glutaraldehyd) und einer Oxocarbonsäure (insbesondere Glyoxylsäure) anvernetztes PVB gemäß WO 2004/063231 A1 eingesetzt. Ein solches anvernetztes PVB weist eine um 10 bis 50 % erhöhte Viskosität gegenüber dem analogen, nicht vernetzten PVB auf.

Der Wassergehalt der Folien wird bevorzugt auf 0,15 bis 0,8 Gew.-%, insbesondere auf 0,3 bis 0,5 Gew.-% eingestellt.

Die erfindungsgemäß hergestellten Folien können insbesondere bei der Herstellung von Laminaten aus einer oder mehreren Kunststoffscheiben und mindestens einer erfindungsgemäß hergestellten strukturierten Folie verwendet werden, wobei die Kunststofffolie (Funktionsfolie) zwischen die nicht geprägten Seiten der erfindungsgemäß hergestellten Folien angeordnet ist.

Im einfachsten Fall besteht ein solches Laminat aus fünf Schichten, nämlich Glas/Folie/Funktionsfolie/Folie/Glas, wobei die geprägten Seiten der Folien dem Glas und die nicht geprägten Seiten der Folien der Funktionsfolie zugewandt sind.

Als Funktionsfolie wird bevorzugt eine optional metallbeschichtete Polyethylenterephthalatfolie (PET) mit einer Dicke von 10 bis 100 µm eingesetzt. Folien dieser Art sind z.B. aus WO 97/03763 bekannt. Die so hergestellten Laminate können als Verbundverglasung im Architekturbereich oder als Verglasung für Kraftfahrzeuge oder Flugzeuge verwendet werden .

Bei der Herstellung dieser Laminate wird zunächst aus den Glas/Kunststoffscheiben und der Folie ein Vorverbund mittels Pressen, Vakuumsack oder Vakuumlippe hergestellt. Vorverbundlaminate sind in der Regel noch durch Lufteinschlüsse leicht getrübt. Die endgültige Herstellung des Laminats erfolgt im Autoklaven, z.B. gemäß WO 03/033583.

### Beispiel:

Es wurde eine weichmacherhaltige PVB-Folie aus 72,5 Gew.% PVB, 25,0 Gew. % 3G8 mit Kalium- und Magnesiumsalzen als Antihaftmittel mit einer beidseitigen Rauheit R_{z} ≤ 5 µm auf einer Anlage gemäß Fig. 3 geprägt.

### Anlagenparameter:

| | |
|---|---|
| Prägewalzendurchmesser: | 245 mm |
| Härte Gummiwalze | 70 ± 5 Shore-A |
| Gummiwalzendurchmesser: | 255 mm |
| Rauhigkeit Prägewalze: | ca. 80 µm |
| Oberflächen-Beschichtung: | PTFE |

Es wurde eine Folie mit den folgenden Prägeeigenschaften erhalten:

| Liniengeschwindigkeit (m/min) | Liniendruck (N/mm) | T Prägewalze (°C) | T Gummiwalze (°C) | Rz (µm) geprägte Seite | Rz (µm) nicht geprägte Seite |
|---|---|---|---|---|---|
| 2,75 | 60 | 120 | 10 | 45 | < 5 |

Zwei der so erhaltenen Folien wurden über die nicht-geprägte Seite mit einer PET-Folie einer Dicke von 50 µm zusammengelegt.

Dieser Folienstapel wurde anschließend zwischen zwei Glasscheiben gelegt und über 25 min bei 95 °C im Vakuumschrank bei 200 mbar absolut zu einem nahezu transparenten Vorverbund verarbeitet. Dieser Vorverbund wurde in einem Autoklaven bei 125 °C, 12 bar über einen Zeitraum von 90 min. zu einem Verbundglas verarbeitet.

## Patentansprüche

1. Verfahren zur Herstellung einer Folie auf Basis von teilacetalisiertem Polyvinylalkohol mit einer Rauhigkeit der ersten Seite von R_{z} = 1 bis 30 µm und einer Rauhigkeit der zweiten Seite von R_{z} = 20 bis 100 µm, durch die Verfahrensschritte
a. Bereitstellen einer Folie auf Basis von teilacetalisiertem Polyvinylalkohol mit einer Rauhigkeit beider Seiten von R_{z} = 1 bis 30 µm und
b. Prägen einer Seite der Folie zwischen einer entsprechend aufgerauten Prägewalze einer Temperatur von 80 bis 170 °C und einer Anpresswalze einer Temperatur von 0 bis 60 °C unter Erhalt einer Folie mit einer Rauhigkeit der geprägten Oberfläche von R_{z} = 20 bis 100 µm, **dadurch gekennzeichnet, dass** die Anpresswalze eine Shore-A-Härte von 50 - 80 aufweist und die Folie zwischen der Prägewalze und Anpresswalze einem Liniendruck von 20 bis 80 N/mm ausgesetzt ist.

2. Verfahren nach Anspruch 1, **dadurch gekennzeichnet, dass** die Oberfläche der Anpresswalze aus Kautschuk oder EPDM besteht.

3. Verfahren nach einem der Anspruche 1 oder 2, **dadurch gekennzeichnet, dass** die Temperaturdifferenz der Prägewalze kleiner 2 °C über die Breite und Umfang der Walze ist.

4. Verfahren nach einem der Ansprüche 1 bis 3, **dadurch gekennzeichnet, dass** die Temperaturdifferenz der Anpresswalze kleiner 2 °C über die Breite und Umfang der Walze ist.

5. Verfahren einem der Ansprüche 1 bis 4, **dadurch gekennzeichnet, dass** die Oberfläche der geprägten Seite der Folie eine Rauhigkeit R_{z} von 20 bis 80 µm aufweist.

6. Verfahren nach einem der Ansprüche 1 bis 5, **dadurch gekennzeichnet, dass** die Temperatur der Folie vor und/oder nach dem Verfahrensschritte b) auf -10 bis +20°C eingestellt wird.

7. Verfahren nach einem der Ansprüche 1 bis 6, **dadurch gekennzeichnet, dass** die geprägte Seite der Folie gekühlt wird.

8. Verfahren nach einem der Ansprüche 1 bis 6, **dadurch gekennzeichnet, dass** die nicht geprägte Seite der Folie gekühlt wird.

## Claims

1. A method for the production of a film based on partially acetalized polyvinyl alcohol having a roughness of the first side of R_{z} = 1 to 30 µm and a roughness of the second side of R_{z} = 20 to 100 µm by means of the process steps
a. providing a film based on partially acetalized polyvinyl alcohol having a roughness of both sides of R_{z} = 1 to 30 µm and
b. embossing one side of the film between a suitably roughened embossing roll of a temperature of 80 to 170 °C and a pressure roll of a temperature of 0 to 60 °C obtaining a film having a roughness of the embossed surface of R_{z} = 20 to 100 µm, **characterized in that** the pressure roll has a Shore A hardness of 50 to 80 and the film is subjected to a linear load of 20 to 80 N/mm between the embossing roll and the pressure roll.

2. A method according to claim 1, **characterized in that** the surface of the pressure roll is made of crude rubber or EPDM.

3. A method according to any one of claims 1 or 2, **characterized in that** the temperature difference of the embossing roll is less than 2 °C across the width and circumference of the roll.

4. A method according to any one of claims 1 to 3, **characterized in that** the temperature difference of the pressure roll is less than 2 °C across the width and circumference of the roll.

5. A method according to any one of claims 1 to 4, **characterized in that** the surface of the embossed side of the film has a roughness R_{z} of 20 to 80 µm.

6. A method according to any one of claims 1 to 5, **characterized in that** the temperature of the film is set to -10 to +20 °C prior to and/or after process step b).

7. A method according to any one of claims 1 to 6, **characterized in that** the embossed side of the film is cooled.

8. A method according to any one of claims 1 to 6, **characterized in that** the non-embossed side of the film is cooled.

## Revendications

1. Procédé de fabrication d'une feuille à base d'alcool polyvinylique partiellement acétalisé, ladite feuille présentant une rugosité de R_{z} = 1 à 30 µm sur sa première face et de R_{z} = 20 à 100 µm sur sa deuxième face, le procédé comprenant les étapes suivantes :
a. mise à disposition d'une feuille à base d'alcool polyvinylique partiellement acétalisé présentant une rugosité de R_{z} = 1 à 30 µm sur ses deux faces, et
b. gaufrage de l'une des faces de ladite feuille en la faisant passer entre un cylindre de gaufrage présentant une rugosité appropriée et une température comprise entre 80 et 170 °C et un cylindre de pression présentant une température comprise entre 0 et 60 °C pour ainsi obtenir une feuille avec une face gaufrée dont la rugosité R_{z} = 20 à 100 µm, **caractérisé en ce que** le cylindre de pression présente une dureté Shore A comprise entre 50 et 80 et que la, lors de son passage entre le cylindre de gaufrage et le cylindre de pression, la feuille subit une pression de ligne comprise entre 20 et 80 N/mm.

2. Procédé selon la revendication 1, **caractérisé en ce que** la surface du cylindre de pression est constituée de caoutchouc ou d'EPDM.

3. Procédé selon l'une des revendications 1 ou 2, **caractérisé en ce que,** à travers toute la largeur et la circonférence du cylindre de gaufrage, les variations de température sont inférieures à 2 °C.

4. Procédé selon l'une des revendications 1 à 3, **caractérisé en ce que,** à travers toute la largeur et la circonférence du cylindre de pression, les variations de température sont inférieures à 2 °C

5. Procédé selon l'une des revendications 1 à 4, **caractérisé en ce que** la surface de la face gaufrée de la feuille présente une rugosité R_{z} comprise entre 20 et 80 µm.

6. Procédé selon l'une des revendications 1 à 5, **caractérisé en ce que,** avant et/ou après l'étape b) du procédé, la température de la feuille est ajustée de façon à ce qu'elle soit comprise entre -10 et +20 °C.

7. Procédé selon l'une des revendications 1 à 6, **caractérisé en ce qu'**on refroidit la face gaufrée de la feuille.

8. Procédé selon l'une des revendications 1 à 6, **caractérisé en ce qu'**on refroidit la face non-gaufrée de la feuille.
